# EUROPEAN PATENT APPLICATION

(11) **EP 4 831 124 A1**
(43) Date of publication of application: **28.10.2026**
(21) Application number: 25769926.4
(22) Date of filing: 03.03.2025
(51) Int. Cl.: C01B 32/40, C25B 1/23

(54) **PRODUCTION METHOD FOR REDUCING GAS AND REDUCTION METHOD FOR IRON ORE**

(30) Priority: 13.03.2024 JP 2024039455
(71) Applicant: JFE Steel Corporation, Tokyo 100-0011 (JP)
(72) Inventor: YOSHIKAWA, Kohei, Tokyo 100-0011 (JP); KOBAYASHI, Mahoko, Tokyo 100-0011 (JP)
(74) Representative: Haseltine Lake Kempner LLP
(86) International application number: PCT/JP2025/007563
(87) International publication number: WO 2025/192350

(57) **Abstract**

Provided is a method of producing reducing gas containing carbon monoxide from feed gas containing carbon dioxide and a sulfur compound. The feed gas consists of one or more by-product gases selected from the group consisting of blast furnace gas, hot stove exhaust gas, coke oven exhaust gas, heating furnace exhaust gas, annealing furnace exhaust gas, and power generation apparatus exhaust gas. The method includes a dry desulfurization process of removing the sulfur compound from the feed gas to obtain purified gas and an electrolysis process of electrolyzing the purified gas using a solid oxide electrolyzer cell to obtain the reducing gas.

## Description

### TECHNICAL FIELD

The present disclosure relates to a method of producing reducing gas and a method of reducing iron ore.

### BACKGROUND

In recent years, decreasing emissions of greenhouse gas has been called for as a measure against global warming. Much of our energy needs are met by burning fossil fuels, and the carbon dioxide produced as a result is a representative example of a greenhouse gas. There are plans to decrease the use of fossil fuels and instead utilize renewable energy sources such as wind, solar, and geothermal power. However, the use of renewable energy presents a problem in terms of cost, and meeting all energy demand with renewable energy is not realistic at present. Accordingly, technologies have been studied in which carbon dioxide generated by the combustion of fossil fuels is separated and captured and then stored (carbon capture and storage: CCS), as well as technologies in which the separated and captured carbon dioxide is converted into valuable products such as fuels and chemical products using the carbon dioxide as a raw material (carbon capture and utilization: CCU).

As an invention related to CCU, for example, in Patent Literature (PTL) 1, a method of synthesizing methane is described, which includes a first reaction process of reacting carbon dioxide and hydrogen to obtain carbon monoxide, and a second reaction process of reacting the produced carbon monoxide with hydrogen to obtain methane. In PTL 2, an invention is described that relates to a method of co-electrolyzing carbon dioxide and water using a solid oxide electrolyzer cell to ultimately synthesize hydrocarbons, and relates to a structure of a solid oxide electrolyzer cell.

When feed gas supplied to a solid oxide electrolyzer cell contains a sulfur component, the surface of the catalyst of the electrode may react with the sulfur, potentially degrading performance. Therefore, technologies for removing sulfur components from feed gases are being studied. For example, in PTL 3, an invention of a high-temperature fuel cell stack is described, in which natural gas and water are supplied to a solid oxide electrolyzer cell to be reformed into synthesis gas containing hydrogen, methane, carbon monoxide, and water, and then the resulting synthesis gas is supplied to a solid oxide fuel cell to extract electricity. This high-temperature fuel cell stack uses hydrogen produced by a solid oxide fuel cell to carry out hydrodesulfurization of sulfur components contained in natural gas. Hydrodesulfurization is a method of removing sulfur from a linear hydrocarbon chain by reacting the sulfur contained in the linear chain with hydrogen to produce hydrogen sulfide. The hydrogen sulfide produced can be easily removed by reacting with a metal to form a metal sulfide.

### CITATION LIST

### Patent Literature

PTL 1: JP 2012-140382 A
PTL 2: JP 2023-050701 A
PTL 3: WO 2011/137916 A1

### SUMMARY

### (Technical Problem)

In a blast furnace process, a typical steelmaking process, carbon dioxide is generated during the reduction of iron oxide using coke. Therefore, the separation of carbon dioxide from blast furnace gas by physical adsorption methods is being studied. Carbon dioxide separated from blast furnace gas retains sulfur components present in the blast furnace gas, but unlike natural gas, these components exist in the form of sulfur compounds such as hydrogen sulfide, carbonyl sulfide, and carbon disulfide.

According to investigation by the inventors, when attempting to carry out hydrodesulfurization on carbon dioxide separated from blast furnace gas using a solid oxide electrolyzer cell as described in PTL 3, it was found that decomposition and removal of sulfur compounds, particularly carbonyl sulfide and carbon disulfide, is difficult. As mentioned above, when the feed gas supplied to a solid oxide electrolyzer cell contains a sulfur compound, electrode performance may deteriorate. Therefore, there was a problem in that the use of carbon dioxide derived from blast furnace gas in CCU was restricted.

The present disclosure is made in view of the above problem, and it would be helpful to provide a method of producing reducing gas containing carbon monoxide from feed gas containing carbon dioxide and a sulfur compound.

### (Solution to Problem)

Primary features of the present disclosure are as follows.
[1] A method of producing reducing gas containing carbon monoxide from feed gas containing carbon dioxide and a sulfur compound,
   wherein the feed gas consists of one or more by-product gases selected from the group consisting of blast furnace gas, hot stove exhaust gas, coke oven exhaust gas, heating furnace exhaust gas, annealing furnace exhaust gas, and power generation apparatus exhaust gas,
   the method comprising:
      a dry desulfurization process of removing the sulfur compound from the feed gas to obtain purified gas; and
      an electrolysis process of electrolyzing the purified gas using a solid oxide electrolyzer cell to obtain the reducing gas.
[2] The method of producing reducing gas according to [1], wherein
   the sulfur compound comprises at least one of carbonyl sulfide or carbon disulfide.
[3] The method of producing reducing gas according to [2], further comprising,
   upstream of the dry desulfurization process, a hydrolysis process of hydrolyzing at least one of carbonyl sulfide or carbon disulfide.
[4] The method of producing reducing gas according to any one of [1] to [3], wherein
   the dry desulfurization process includes an operation to remove the sulfur compound using a dry desulfurizing agent.
[5] The method of producing reducing gas according to [4], wherein
   the dry desulfurizing agent is a desulfurizing agent containing zinc oxide.
[6] The method of producing reducing gas according to any one of [1] to [5], further comprising,
   upstream of the dry desulfurization process, a dehydration process of removing water and water vapor contained in the feed gas.
[7] The method of producing reducing gas according to any one of [1] to [6], further comprising,
   upstream of the dry desulfurization process, a dust removal process of removing dust contained in the feed gas.
[8] The method of producing reducing gas according to any one of [1] to [7], further comprising,
   downstream of the dry desulfurization process but upstream of the electrolysis process, a hydration process of adding water vapor to the purified gas,
   wherein the reducing gas contains hydrogen.
[9] The method of producing reducing gas according to any one of [1] to [8], wherein
   the feed gas consists of the blast furnace gas.
[10] A method of reducing iron ore, the method comprising:
   a dry desulfurization process of removing a sulfur compound from by-product gas generated from a blast furnace, the by-product gas containing carbon dioxide and the sulfur compound, to obtain a purified gas;
   an electrolysis process of electrolyzing the purified gas using a solid oxide electrolyzer cell to obtain reducing gas; and
   a reduction process of supplying the reducing gas to the blast furnace to reduce the iron ore.

### (Advantageous Effect)

According to the method of producing reducing gas of the present disclosure, in the process of producing a reducing gas containing carbon monoxide using a solid oxide electrolyzer cell and feed gas containing carbon dioxide and a sulfur compound, deterioration of the solid oxide electrolyzer cell due to the sulfur compound can be suppressed. This makes it possible to easily produce reducing gas from, for example, feed gas derived from blast furnace gas, the feed gas containing carbon dioxide and a sulfur compound.

### BRIEF DESCRIPTION OF THE DRAWINGS

In the accompanying drawings:
FIG. 1 is a flowchart illustrating a method of producing reducing gas according to the present disclosure;
FIG. 2 is a schematic diagram illustrating a process of electrolysis of carbon dioxide using a solid oxide electrolyzer cell;
FIG. 3 is a flowchart illustrating a conventional method of producing reducing gas;
FIG. 4 is a flowchart illustrating options upstream of a dry desulfurization process in a method of producing reducing gas according to the present disclosure;
FIG. 5 is a flowchart illustrating an option downstream of a dry desulfurization process in a method of producing reducing gas according to the present disclosure; and
FIG. 6 is a flowchart illustrating a method of reducing iron ore according to the present disclosure.

### DETAILED DESCRIPTION

Embodiments of the present disclosure are described in detail below. Hereinafter, the chemical composition of gas is expressed as a percentage by volume (vol%) or parts per million by volume (ppm). When precision is required, chemical composition of gas may be chemical composition under standard conditions. Standard conditions refer to a state in which the gas temperature is 0 °C and the gas pressure is 1 atmosphere.

### 1. Method of producing reducing gas

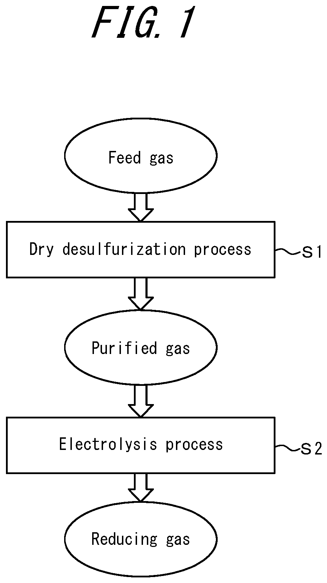

According to an embodiment, the present disclosure relates to a method of producing reducing gas containing carbon monoxide from feed gas containing carbon dioxide and a sulfur compound, wherein the feed gas consists of one or more by-product gases selected from the group consisting of blast furnace gas, hot stove exhaust gas, coke oven exhaust gas, heating furnace exhaust gas, annealing furnace exhaust gas, and power generation apparatus exhaust gas, the method comprising: a dry desulfurization process of removing the sulfur compound from the feed gas to obtain purified gas; and an electrolysis process of electrolyzing the purified gas using a solid oxide electrolyzer cell to obtain the reducing gas. FIG. 1 is a flowchart illustrating the method of producing reducing gas according to the present disclosure. In the method of producing reducing gas according to the present disclosure, the feed gas is treated in a dry desulfurization process S1 to obtain purified gas, and then the obtained purified gas is treated in an electrolysis process S2 to produce the reducing gas.

### <Feed gas>

The feed gas used in the method of producing reducing gas according to the present disclosure is a gas containing carbon dioxide and a sulfur compound. A typical example of feed gas is blast furnace gas, which is by-product gas generated from a blast furnace. As mentioned above, steelmaking processes, such as the blast furnace process, generate a large amount of carbon dioxide, so the separation of carbon dioxide from blast furnace gas by physical adsorption methods is being studied. Storing separated carbon dioxide directly (CCS) presents a problem in terms of cost. Converting carbon dioxide generated from blast furnaces into valuable substances using the method of producing reducing gas according to the present disclosure and effectively utilizing them in the steelmaking process (CCU) is preferable in terms of supply and demand balance.

Blast furnace operation generates by-product gases containing carbon dioxide and sulfur compounds. The method of producing a reducing gas according to the present disclosure is suitable as a means for producing reducing gas containing carbon monoxide using such by-product gas. The reducing gas produced by the method of producing reducing gas according to the present disclosure can be used, for example, as a gas to promote or assist a reduction reaction in a blast furnace.

The feed gas used in the method of producing reducing gas according to the present disclosure consists of one or more by-product gases selected from the group consisting of blast furnace gas, hot stove exhaust gas, coke oven exhaust gas, heating furnace exhaust gas, annealing furnace exhaust gas, and power generation apparatus exhaust gas. These by-product gases all contain carbon dioxide and sulfur compounds. These by-product gases may be used individually or as a mixture of two or more.

Carbon dioxide, which is contained in the feed gas, is a typical greenhouse gas, and as mentioned above, is a gas for which a decrease in emissions is sought. According to the method of producing reducing gas of the present disclosure, carbon dioxide contained in the feed gas can be converted to carbon monoxide by electrolysis using a solid oxide electrolyzer cell, thereby promoting the utilization of carbon dioxide by CCU. A carbon dioxide content of 15 vol% or more in the feed gas is preferable in terms of yield of reducing gas, as carbon dioxide becomes a main component of the feed gas. There is no particular upper limit on the percentage of carbon dioxide. For example, the carbon dioxide content may be 99.9 vol% or less.

The sulfur compound contained in the feed gas includes at least one of hydrogen sulfide, carbonyl sulfide, or carbon disulfide. As mentioned above, a problem arises when feed gas containing a sulfur compound is supplied to a solid oxide electrolyzer cell, making electrolysis of carbon dioxide difficult. The present disclosure addresses such a problem, and therefore the feed gas used in the method of producing reducing gas according to the present disclosure is limited to feed gas containing both carbon dioxide and a sulfur compound. The proportion of the sulfur compound in the feed gas is preferably more than 0.010 ppm. The proportion of the sulfur compound is preferably 1.0 vol% or less. When more than 0.010 ppm, desulfurization becomes necessary, and therefore the significant effects of the present disclosure become obtainable. When 1.0 vol% or less, the utilization of carbon dioxide is not greatly hindered. The sulfur compound according to the present disclosure is limited to a sulfur compound in a gaseous state during the process of carrying out the method of producing reducing gas according to the present disclosure. Further, hereinafter, "proportion of the sulfur compound" refers to the total proportion of all sulfur compounds in the gaseous state contained in the feed gas.

In addition to the carbon dioxide and the sulfur compound, the feed gas may contain other gaseous components, to the extent that they do not significantly hinder the electrolysis of carbon dioxide in a solid oxide electrolyzer cell. Examples of other gaseous components include carbon monoxide, hydrogen, and a small amount of water vapor.

### <Electrolysis process>

As illustrated in FIG. 1, the method of producing a reducing gas according to the present disclosure includes an electrolysis process S2 of electrolyzing purified gas using a solid oxide electrolyzer cell to obtain a reducing gas. Here, purified gas refers to gas from which the sulfur compound has been removed from the feed gas, and more details are provided later.

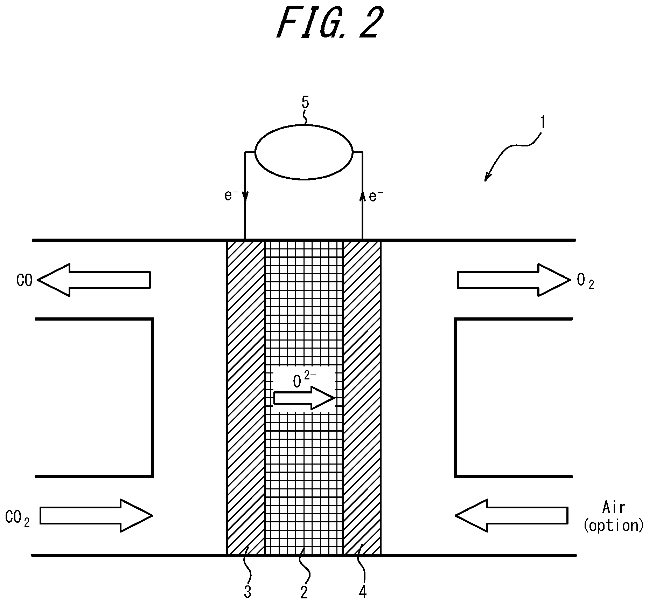

The technology as a basis for the method of producing reducing gas according to the present disclosure is a method of electrolyzing carbon dioxide using a solid oxide electrolyzer cell to obtain carbon monoxide. FIG. 2 is a schematic diagram illustrating a process of electrolysis of carbon dioxide using a solid oxide electrolyzer cell. The solid oxide electrolyzer cell 1 has a structure in which a solid electrolyte 2 is sandwiched between a cathode 3 and an anode 4. A solid oxide electrolyzer cell is sometimes referred to as "SOEC".

The solid electrolyte 2 can be composed of, for example, yttria-stabilized zirconia having ionic conductivity. The solid electrolyte 2 is maintained at a high temperature of 650 °C or higher by a heater (not illustrated). By using an external DC power supply 5 to create a potential difference between the cathode 3 and the anode 4, oxygen ions move from the cathode 3 side to the anode 4 side within the solid electrolyte 2. The cathode 3 can be composed of, for example, a porous material made by mixing fine nickel particles with yttria-stabilized zirconia. Nickel particles act as a catalyst in the electrolysis of carbon dioxide. The anode 4 can be constructed, for example, by forming a thin film of La-Sr oxide on a porous support. Specific examples of La-Sr oxides include La-Sr-Co oxide, La-Sr-Co-Fe oxide, and La-Sr-Fe-Mn oxide.

In the SOEC 1 having the above configuration, when carbon dioxide is supplied to the surface of the cathode 3, the carbon dioxide receives electrons from the cathode 3 and is electrolyzed into carbon monoxide and oxygen ions. The chemical formula (1) for the electrochemical reaction at the cathode 3 is below.
[Chem. 1]

CO₂ + 2e⁻ → CO + O²⁻ ... (1)

The carbon monoxide generated in this reaction is extracted from the surface of the cathode 3 to the outside of the SOEC 1 and used as reducing gas according to the present disclosure. Meanwhile, oxygen ions move through the solid electrolyte 2 towards the anode 4, releasing electrons to the anode 4 and becoming oxygen. The chemical formula (2) for the electrochemical reaction at the anode 4 is below.
[Chem. 2]

2O²⁻ → O₂ + 4e⁻ ... (2)

The oxygen generated in this reaction is extracted from the surface of the anode 4 to the outside of the SOEC 1 and used as a by-product according to the present disclosure. Air may be introduced into the anode 4 from the outside in order to remove the oxygen generated at the anode 4.

It is preferable that the electricity used in the DC power supply 5 of the SOEC 1 be electricity obtained from renewable energy sources.

### <Dry desulfurization process>

When the feed gas supplied to the surface of the cathode 3 of the SOEC 1 contains carbon dioxide and a sulfur compound, electrolysis of the carbon dioxide by the SOEC 1 becomes difficult. Nickel particles are dispersed on the surface of the cathode 3. The nickel particles function as a catalyst, decreasing the activation energy required during the electrolysis of the carbon dioxide. Further, the surface of the nickel particles is electrically active and plays a role in transferring electrons to the carbon dioxide. However, when a sulfur compound such as hydrogen sulfide is mixed into the feed gas, electrically inactive nickel sulfide is formed on the surface of the nickel particles. Because of this, electrons cannot be transferred to the carbon dioxide, making it difficult to electrolyze the carbon dioxide.

Referring again to FIG. 1, the method of producing a reducing gas according to the present disclosure includes the dry desulfurization process S1 in which the sulfur compound is removed from the feed gas to obtain the purified gas. In the dry desulfurization process, the sulfur compound is removed from the feed gas containing the carbon dioxide and the sulfur compound. Hereinafter, the gas remaining after the sulfur compound has been removed is referred to as the purified gas. By supplying the purified gas, from which the sulfur compound has been removed, to the cathode 3 of the SOEC 1 and carrying out the electrolysis process S2, the electrical activity of the nickel particles can be maintained. This allows for stable and continuous electrolysis of the carbon dioxide while preventing degradation of the cathode 3 of the SOEC 1.

When the proportion of sulfur compound in the purified gas is 0.10 ppm or less, this can suppress the degradation of the cathode, and is therefore preferably 0.10 ppm or less. The proportion of sulfur compound in the purified gas is more preferably 0.010 ppm or less. The proportion of sulfur compound in the purified gas should be as low as possible, and therefore no lower limit is specifically set, and may be zero. The proportion of sulfur compound is even more preferably at a detection limit of an analytical means or less.

### <Sulfur compound>

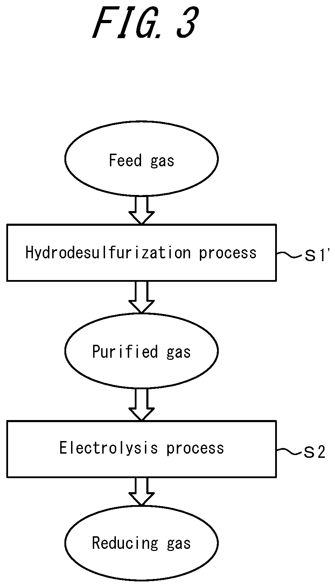

According to a preferred embodiment, the method of producing reducing gas according to the present disclosure includes at least one of carbonyl sulfide or carbon disulfide as the sulfur compound. These sulfur compounds are particularly difficult to desulfurize using conventional hydrodesulfurization methods. FIG. 3 is a flowchart illustrating a conventional method of producing reducing gas. This conventional technology employs hydrodesulfurization, as described in PTL 3, for desulfurization. When feed gas containing a sulfur compound is subjected to hydrodesulfurization, the methanation of carbon dioxide is likely to proceed. This is explained using carbonyl sulfide as an example. In the conventional method of producing reducing gas illustrated in FIG. 3, when a hydrodesulfurization process S1' is carried out using a feed gas containing carbon dioxide and carbonyl sulfide, carbon dioxide reacts with hydrogen to produce methane and water. The chemical formula (3) for this reaction is below.
[Chem. 3]

CO₂ + 4H₂ → CH₄ + 2H₂O ... (3)

On the other hand, carbonyl sulfide reacts with hydrogen to produce carbon monoxide and hydrogen sulfide. The chemical formula (4) for this reaction is below.
[Chem. 4]

COS + H₂ → CO + H₂S ... (4)

The chemical reaction represented by the chemical formula (3) is methanation of carbon dioxide, also known as the Sabatier reaction. This chemical reaction is exothermic, and the change in free energy ΔG is approximately -130 kJ/mol. Therefore, the chemical reaction represented by the chemical formula (3) tends to proceed spontaneously in the presence of a catalyst such as nickel particles. On the other hand, the change in free energy ΔG for hydrodesulfurization of carbonyl sulfide represented by the chemical formula (4) is close to zero. Therefore, this chemical reaction is unlikely to proceed spontaneously unless special measures are taken, such as increasing the partial pressure of hydrogen.

As a result, in the hydrodesulfurization process S1', most of the hydrogen is consumed in the methanation of carbon dioxide, while the hydrodesulfurization of carbonyl sulfide hardly progresses. Further, carbon dioxide contained in the feed gas is consumed by the methanation, and therefore the yield of the desired carbon monoxide-containing reducing gas decreases. Further, when the purified gas containing methane is treated in the electrolysis process S2 in the presence of water vapor, the methane reacts with water to produce carbon monoxide and hydrogen, but a large amount of heat is lost during this process, causing the temperature of the SOEC to decrease. Similarly, when the sulfur compound is carbon disulfide rather than carbonyl sulfide, carbon dioxide methanation proceeds preferentially.

The present disclosure would be helpful to solve the above-mentioned problems associated with conventional hydrodesulfurization processes. According to a preferred embodiment, the sulfur compound contained in the feed gas is limited to containing at least one of carbonyl sulfide or carbon disulfide, for which the effects of the present disclosure are particularly pronounced.

### <Dry desulfurizing agent>

According to a preferred embodiment, the method of producing reducing gas according to the present disclosure includes the dry desulfurization process including an operation to remove the sulfur compound using a dry desulfurizing agent. Dry desulfurizing agents are granular substances used in dry desulfurization. In dry desulfurization, the feed gas is passed through a container loaded with a dry desulfurizing agent, and a sulfur compound is removed from the feed gas by physical or chemical adsorption of the sulfur compound onto the surface of the dry desulfurizing agent. Among the sulfur compounds that may be contained in the feed gas, hydrogen sulfide, for example, can be removed by reacting with a metal to form a metal sulfide, as mentioned above, and can also be removed relatively easily because it is readily soluble in water. On the other hand, carbonyl sulfide and carbon disulfide are difficult to remove by these methods, and therefore are effectively removed using a dry desulfurizing agent. According to this preferred embodiment, known dry desulfurizing agents such as iron-based desulfurizing agents like iron oxyhydroxide, copper-based desulfurizing agents, or zinc oxide can be used as the dry desulfurizing agent.

According to a more preferred embodiment, the dry desulfurizing agent is a desulfurizing agent containing zinc oxide. Among the dry desulfurizing agents exemplified above, iron-based dry desulfurizing agents have difficulty completely removing carbonyl sulfide and carbon disulfide. Further, while copper-based dry desulfurizing agents can remove carbonyl sulfide and carbon disulfide, they simultaneously react with carbon monoxide and water to produce carbon dioxide and hydrogen, and are therefore not necessarily suitable as dry desulfurizing agents according to the present disclosure. Zinc oxide does not have these drawbacks, and is therefore more preferable as a dry desulfurizing agent according to the present disclosure. The chemical formulas (5), (6), and (7) for the reactions of desulfurizing hydrogen sulfide, carbonyl sulfide, and carbon disulfide using zinc oxide are below.
[Chem. 5]

ZnO + H₂S → ZnS + H₂O ... (5)

[Chem. 6]

ZnO + COS → ZnS + CO₂ ... (6)

[Chem. 7]

2ZnO + CS₂ → 2ZnS + CO₂ ... (7)

As the form of the desulfurizing agent containing zinc oxide, a cylindrical form obtained by extruding a slurry containing a powder of the active ingredient, followed by drying and solidification, is preferred. The outer diameter of the cylindrical form of the desulfurizing agent is preferably 3.0 mm or more. The outer diameter is preferably 5.0 mm or less. A diameter of 3.0 mm or more does not hinder the flow of the feed gas, and a diameter of 5.0 mm or less secures the surface area necessary for adsorption. In dry desulfurization using a desulfurizing agent containing zinc oxide, it is preferable to maintain the temperature of the desulfurizing agent from 350 °C to 450 °C, in terms of efficiency of adsorption of sulfur compounds. Heating the desulfurizing agent is preferably carried out by heat exchange with the purified gas after desulfurization or the reducing gas after electrolysis. Desulfurizing agent containing zinc oxide, when used for a certain period, experiences a decrease in adsorption efficiency, and therefore in such a case, replacement with a new desulfurizing agent is preferred.

As mentioned above, even when the dry desulfurizing agent is heated, contact with the feed gas at a lower temperature can lower the temperature of the dry desulfurizing agent, which can reduce the efficiency of adsorption of sulfur compounds. To prevent such problems, a pre-desulfurization heating process may be provided before the dry desulfurization process, in which the feed gas is heated. The temperature of the feed gas heated in the pre-desulfurization heating process is preferably controlled to be equal to or slightly higher than the temperature of the heated desulfurizing agent.

### <Hydrolysis process>

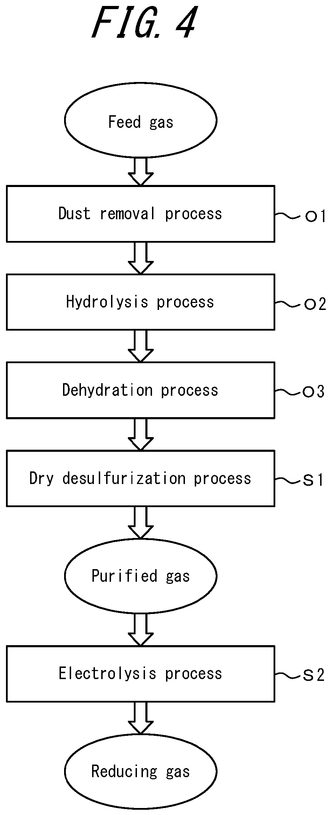

The following describes some processes that can be implemented as options upstream of the dry desulfurization process described above. FIG. 4 is a flowchart that includes options upstream of the dry desulfurization process S1. These upstream options may be implemented in combination with the downstream option described later, or may be implemented independently. According to a preferred embodiment, the method of producing reducing gas according to the present disclosure includes a hydrolysis process O2 upstream of the dry desulfurization process S1, of hydrolyzing at least one of carbonyl sulfide or carbon disulfide. Carbonyl sulfide and carbon disulfide react with water or water vapor to produce carbon dioxide and hydrogen sulfide. The chemical formulas (8) and (9) for these reactions are below.
[Chem. 8]

COS + H₂O → CO₂ + H₂S ... (8)

[Chem. 9]

CS₂ + 2H₂O → CO₂ + 2H₂S ... (9)

The chemical reactions represented by the chemical formulas (8) and (9) proceed readily, for example, in the presence of an alumina catalyst heated to 200 °C, and do not involve methanation. Further, the reactions proceed even in the presence of carbon dioxide or carbon monoxide. Therefore, the hydrolysis process is suitable for removing carbonyl sulfide and carbon disulfide from the feed gas. By adding a hydrolysis process upstream of the dry desulfurization process, carbonyl sulfide and carbon disulfide can be removed more completely. This can prevent a phenomenon called sulfur slip, in which a sulfur compound leaks into downstream processes such as electrolysis.

As illustrated in FIG. 4, when the dehydration process O3, described later, is upstream of the dry desulfurization process S1, the hydrolysis process O₂ is preferably upstream of both the dry desulfurization process S1 and the dehydration process O3. Further, when a dust removal process O1, described later, is included in addition to the dehydration process O3, the hydrolysis process O2 is preferably downstream of the dust removal process O1 and upstream of the dehydration process O3.

### <Dehydration process>

According to a preferred embodiment, the method of producing reducing gas according to the present disclosure includes the dehydration process O3 upstream of the dry desulfurization process S1, removing water and water vapor contained in the feed gas. When the feed gas used for dry desulfurization contains water vapor, the desulfurization process is less efficient. This is explained using zinc oxide as an example. The chemical formula (5) representing the desulfurization of hydrogen sulfide by zinc oxide is reproduced below.
[Chem. 10]

ZnO + H₂S → ZnS + H₂O ... (5)

When the partial pressure of water vapor in the feed gas is high, the chemical equilibrium of the chemical reaction represented by the chemical formula (5) shifts towards the left side, and therefore the chemical adsorption of hydrogen sulfide by zinc oxide does not proceed. This trend is also observed with sulfur compounds other than hydrogen sulfide. Therefore, according to a preferred embodiment, by removing water or water vapor contained in the feed gas in advance and lowering the partial pressure of water vapor, the chemical equilibrium of the chemical formula (5) is shifted toward the right side. This improves the efficiency of desulfurization and allows for a more stable electrolysis process in the SOEC.

Specific means for carrying out the dehydration process include, for example, a method in which the feed gas is passed over the surface of piping cooled by water or other refrigerants to cause condensation and removal of moisture, or a method using an adsorbent such as hydrophilic zeolite. When there is a surplus heat source available to heat an adsorbent to remove water adsorbed thereby and regenerate the adsorbent, then using an adsorbent is more efficient and therefore preferable.

### <Dust removal process>

According to a preferred embodiment, the method of producing reducing gas according to the present disclosure includes the dust removal process O1 upstream of the dry desulfurization process S1, removing dust contained in the feed gas. Blast furnace gas generated during the steelmaking process contains a lot of dust. Because the dust contained in blast furnace gas is extremely fine and light, it exists in a suspended state within the blast furnace gas without falling due to gravity. When blast furnace gas contaminated with dust is used as the feed gas according to the present disclosure, dust may adhere to the surface of the dry desulfurizing agent and electrodes, potentially decreasing the efficiency of treatment. Therefore, dust contained in the feed gas is preferably removed in advance, upstream of the dry desulfurization process S1.

Any means may be used to remove the dust. For example, it is preferable to separate and remove dust from the feed gas using a device such as a wet dust collector (wet scrubber). In a wet dust collector, the water temperature used for washing the feed gas is preferably 30 °C or higher. The water temperature is preferably 60 °C or lower. The water temperature of 30 °C or higher provides excellent dust collection efficiency, while the water temperature of 60 °C or lower ensures that the amount of water or water vapor in the feed gas is not excessive, thus mitigating the treatment burden when carrying out the dehydration process O3 downstream. A more preferable water temperature range is from 30 °C to 40 °C. As the wet dust collector, a known device such as a Venturi scrubber can be used.

When carrying out the dust removal process O1 using wet dust removal, it is unavoidable that water vapor is mixed into the feed gas even when the water temperature is lowered. Therefore, as illustrated in FIG. 4, the dehydration process O3 described above is preferably carried out downstream of the dust removal process O1 but upstream of the dry desulfurization process S1.

### <Hydration process>

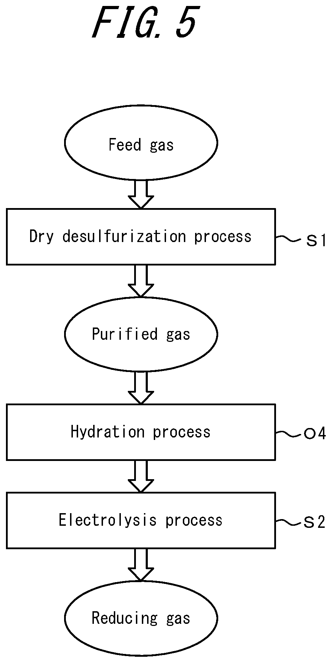

The following describes a process that can be implemented as an option downstream of the dry desulfurization process. FIG. 5 is a flowchart that includes an option downstream of the dry desulfurization process S1. This downstream option may be implemented in combination with the upstream options described above, or may be implemented independently. According to a preferred embodiment, the method of producing reducing gas according to the present disclosure includes the hydration process O4 of adding water vapor to the purified gas downstream of the dry desulfurization process S1 but upstream of the electrolysis process S2, where the reducing gas contains hydrogen. By adding water vapor to the purified gas, the electrolysis process S2 involves the simultaneous electrolysis of carbon dioxide and water. Specifically, when water vapor is supplied to the surface of the cathode 3 in the SOEC 1, water molecules receive electrons from the cathode 3 and are electrolyzed into hydrogen and oxygen ions. The chemical formula (10) for the electrochemical reaction at the cathode 3 is below.
[Chem. 11]

H₂O + 2e⁻ → H₂ + O²⁻ ... (10)

Hydrogen is produced at the cathode 3 by the reaction represented by the chemical formula (10). At the cathode 3, carbon dioxide and water are simultaneously electrolyzed (co-electrolyzed), resulting in the production of carbon monoxide and hydrogen. Hydrogen, like carbon monoxide, is a reducing gas, and therefore the synthesis gas containing both carbon monoxide and hydrogen is also a reducing gas. On the other hand, as indicated in the chemical formula (2), oxygen ions move through the solid electrolyte 2 towards the anode 4, releasing electrons to the anode 4 to become oxygen. The oxygen derived from the water vapor generated at the anode 4 mixes with the oxygen derived from carbon dioxide, is extracted to the outside of the SOEC 1, and used as a by-product.

In the hydration process, the water vapor added to the purified gas is preferably generated by heating water of the highest possible purity. For the water vapor used in the hydration process, it is preferable to use, for example, water vapor produced by indirectly heating deionized water.

### <Blowing means>

According to a preferred embodiment, the method of producing reducing gas according to the present disclosure includes a means for supplying the feed gas. The blowing means is effective as a means of generating pressure to supply the feed gas to the dry desulfurization process. The blowing means can consist of, for example, a blower equipped with a fan. Permissible temperature ranges for using fan-rotating drive mechanisms are not very high. For this reason, the blowing means is preferably installed upstream of the dry desulfurization process, in which the purified gas may be heated to high temperatures.

### 2. Method of reducing iron ore

According to another embodiment, the present disclosure relates to a method of reducing iron ore, the method comprising: a dry desulfurization process of removing a sulfur compound from by-product gas generated from a blast furnace, the by-product gas containing carbon dioxide and the sulfur compound, to obtain a purified gas; an electrolysis process of electrolyzing the purified gas using a solid oxide electrolyzer cell to obtain reducing gas; and a reduction process of supplying the reducing gas to the blast furnace to reduce the iron ore.

As described above, the reducing gas produced using the method of producing reducing gas according to the present disclosure contains carbon monoxide obtained by reducing carbon dioxide. Further, the water vapor originally contained in the by-product gas, and the water vapor added to the purified gas in the hydration process according to a preferred embodiment, are reduced to hydrogen by the electrolysis process S2. Both carbon monoxide and hydrogen have reducing properties, and therefore can be used as gases to promote or assist reduction reactions in blast furnaces.

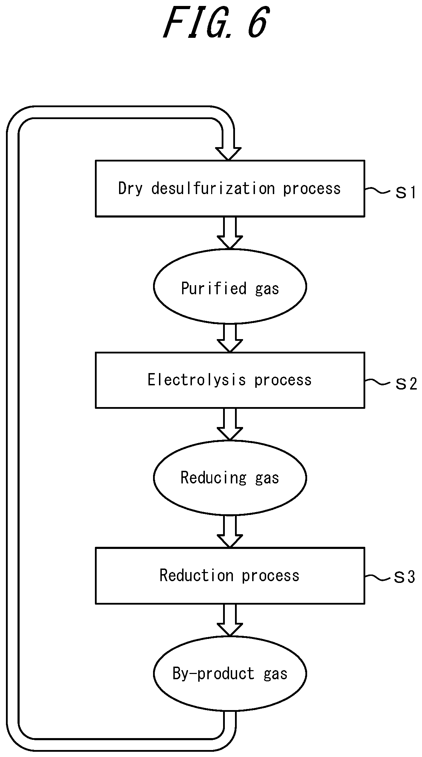

FIG. 6 is a flowchart illustrating the method of reducing iron ore according to the present disclosure. The dry desulfurization process S1 and the electrolysis process S2 have already been explained, and therefore a detailed explanation is omitted here. However, as illustrated in FIG. 6, it should be noted that in the method of reducing iron ore according to the present disclosure, the target for removing a sulfur compound in the dry desulfurization process S1 is not the typical feed gas, but rather the by-product gas generated from the blast furnace in the reduction process S3. The by-product gas is converted into the purified gas by removing the sulfur compound in the dry desulfurization process S1. Of course, the above-mentioned options may be implemented both upstream and downstream of the dry desulfurization process S1.

Next, the purified gas is converted into reducing gas mainly composed of carbon monoxide by the electrolysis process S2, and the resulting reducing gas is supplied to the blast furnace in the reduction process S3 and used to reduce iron ore. In the reduction process S3, carbon monoxide contained in the reducing gas is converted to carbon dioxide, and hydrogen is converted to water vapor. The carbon dioxide and water vapor generated from the blast furnace are recovered as by-product gases and sent back to the dry desulfurization process S1. In this way, according to the present disclosure, by converting by-product gas generated from a blast furnace into reducing gas and reusing the gas, it is possible to decrease carbon dioxide emissions into the environment to as close to zero as possible.

The reducing gas used in the reduction process S3 may be all of the reducing gas generated in the electrolysis process S2, or may be only a portion thereof. Further, when the reductant required for reducing the iron ore in the reduction process S3 is insufficient with only the reducing gas generated in the electrolysis process S2, other reductants such as carbon monoxide generated from coke may be used in combination.

As described above, in the electrolysis process S2, oxygen is generated as a by-product at the anode 4 of the SOEC 1 by the chemical formula (2) of the electrochemical reaction. The oxygen obtained here can be used for various purposes within a steelworks, such as in the steelmaking process using an LD converter.

### <Chemical thermodynamic calculation>

The following describes embodiments for implementing the present disclosure, with specific numerical values. The embodiments herein were not determined through actual experiments, but rather through chemical thermodynamic calculations based on the equilibrium constants of chemical reaction equations. Embodiments of the present disclosure are not limited to the following calculated examples, and embodiments of the present disclosure can be modified as desired without departing from the scope of the present disclosure.

### (Calculated Example 1)

First is a calculated example relating to a dry desulfurization process that uses a desulfurizing agent containing zinc oxide to remove hydrogen sulfide from a feed gas containing carbon dioxide and hydrogen sulfide to obtain purified gas. The chemical formula (5) representing this dry desulfurization process is reproduced as follows.
[Chem. 12]

ZnO(s) + H₂S(g) → ZnS(s) + H₂O(g) ... (5)

Here, the symbol g indicates a gas, and the symbol s indicates a solid. By setting the temperature for the dry desulfurization process to 400 °C and using known standard enthalpy of formation and standard entropy values for these gases and solids, the Gibbs free energy change ΔG of the chemical formula (5) at 400 °C can be calculated. From the calculated Gibbs free energy change ΔG and gas constant of the chemical formula (5), the equilibrium constant K at 400 °C for the chemical reaction represented by the chemical formula (5) can be calculated. This equilibrium constant K is equal to K expressed by the following expression (1). Here, [H₂S] is the partial pressure of hydrogen sulfide, and [H₂O] is the partial pressure of water vapor. Further, we assume that a sufficient amount of zinc oxide is present relative to the volume fraction of hydrogen sulfide. Assuming the mixed gas is an ideal gas, the ratio of partial pressures in the mixed gas is equal to the ratio of volume fractions.
[Math. 1] $K = \frac{\left[{H}_{2}O\right]}{\left[{H}_{2}S\right]}$ (1)

Under the above assumptions, the volume fractions of hydrogen sulfide remaining in the purified gases obtained by desulfurizing the feed gases of Examples 1 to 3 listed in Table 1 are calculated. Since the amount of water vapor produced by the reaction of the chemical formula (5) is negligible compared to the amount of water vapor originally contained in the feed gas, we can ignore the former and substitute the calculated value of K and the volume fraction of water vapor into the expression (1) to calculate the volume fraction of hydrogen sulfide that is in equilibrium with the volume fraction of water vapor contained in the purified gas. The results of this calculation are listed in Table 1.

### [Table 1]

**Table 1**

| | Feed gas | | | Purified gas | Remarks |
|---|---|---|---|---|---|
| | CO₂ (vol%) | H₂O (vol%) | H₂S (ppm) | H₂S (ppm) | |
| Example 1 | 90 | 10 | 10 | 0.105 | dry desulfurization |
| Example 2 | 95 | 5 | 10 | 0.052 | dry desulfurization |
| Example 3 | 99 | 1 | 10 | 0.010 | dry desulfurization |

According to the results of the chemical thermodynamic calculations listed in Table 1, it can be seen that the volume fraction of hydrogen sulfide contained in the feed gas can be decreased to approximately 1/100 or less by the dry desulfurization process according to the present disclosure. The volume fraction of hydrogen sulfide remaining in the purified gas decreases as the amount of water vapor in the feed gas decreases. In the purified gas of Example 2, where the volume fraction of water vapor is 5 %, the volume fraction of hydrogen sulfide is 0.052 ppm, which is less than the preferred upper limit of 0.10 ppm of a sulfur compound for suppressing cathode degradation. In the purified gas of Example 3, where the volume fraction of water vapor is 1 %, the volume fraction of hydrogen sulfide is 0.010 ppm, which is equal to the more preferable upper limit of a sulfur compound for suppressing cathode degradation.

### (Calculated Example 2)

Next is a calculated example relating to a hydrolysis process that removes carbonyl sulfide from a feed gas containing carbon dioxide and carbonyl sulfide using water vapor. The chemical formula (8) representing this hydrolysis process is reproduced below.
[Chem. 13]

COS(g) + H₂O(g) → CO₂(g) + H₂S(g) ... (8)

The Gibbs free energy change ΔG and equilibrium constant K for the chemical formula (8) at 400 °C are calculated using the same procedure as for Calculated Example 1. This equilibrium constant K is equal to K expressed by the following expression (2). Here, [COS] is the partial pressure of carbonyl sulfide, and [CO₂] is the partial pressure of carbon dioxide. Further, we assume that a sufficient amount of water vapor is present relative to the volume fraction of carbonyl sulfide.
[Math. 2] $K = \frac{\left[{H}_{2}S\right] \left[{CO}_{2}\right]}{\left[COS\right] \left[{H}_{2}O\right]}$ (2)

Under the above assumptions, the volume fraction of carbonyl sulfide remaining in the gas obtained after hydrolysis by hydrolyzing the feed gas of Example 4 indicated in Table 2 is calculated. Since the amount of water vapor consumed and the amount of carbon dioxide produced by the reaction of the chemical formula (8) are negligible compared to the amount of carbon dioxide and water vapor originally contained in the feed gas, we can ignore both of these. Further, assuming that almost all of the 10 vol% carbonyl sulfide contained in the feed gas is hydrolyzed, it is estimated that the volume fraction of hydrogen sulfide in the gas after hydrolysis is 10 vol%. By substituting the calculated value of K and the volume fraction of gases other than carbonyl sulfide into expression (2), the volume fraction of carbonyl sulfide contained in the gas after hydrolysis can be calculated. The results of this calculation are indicated for Example 4 of Table 2.

### [Table 2]

**Table 2**

| | Feed gas | | | | Gas after hydrolysis | | | | | | | Remarks |
|---|---|---|---|---|---|---|---|---|---|---|---|---|
| | CO₂ (vol%) | H₂O (vol%) | COS (ppm) | H₂ (vol%) | CO₂ (vol%) | H₂O (vol%) | COS (ppm) | H₂ (vol%) | H₂S (ppm) | CO (vol%) | CH₄ (vol%) | |
| Example 4 | 90 | 10 | 10 | - | 90 | 10 | 0.02 | - | 10 | - | - | dry desulfurization |
| Comparative Example 1 | 90 | - | 10 | 10 | 90 | 5.4 | 0.47 | 1.4 | 10 | 1.9 | 1.7 | hydrodesulfurization |

According to the results of the chemical thermodynamic calculations listed in Table 2, it can be seen that the volume fraction of carbonyl sulfide contained in the feed gas can be decreased to approximately 1/500 by the hydrolysis process according to the present disclosure. The trace amounts of hydrogen sulfide generated by the reaction of the chemical formula (8) during the hydrolysis process can be removed in the dry desulfurization process, as indicated for Calculated Example 1.

### (Comparative Example)

Next, for a feed gas containing carbon dioxide and carbonyl sulfide, as in Example 4, a comparative example is presented relating to a process for removing carbonyl sulfide using conventional hydrodesulfurization without a hydrolysis process. The chemical formulas (3) and (4) representing this hydrodesulfurization process are reproduced below.
[Chem. 14]

CO₂(g) + 4H₂(g) → CH₄(g) + 2H₂O(g) ... (3)

[Chem. 15]

COS(g) + H₂(g) → CO(g) + H₂S(g) ... (4)

By following the same procedure as for Calculated Examples 1 and 2, the Gibbs free energy change ΔG and equilibrium constant K for the chemical formulas (3) and (4) at 400 °C can be calculated, and the volume fraction of the gas after hydrodesulfurization can be calculated. The results of these calculations are listed for Comparative Example 1 in Table 2. According to the results of the chemical thermodynamic calculations listed in Table 2, for Comparative Example 1, most of the hydrogen is consumed in the methanation of carbon dioxide represented by the chemical formula (3), while the hydrodesulfurization of carbonyl sulfide represented by the chemical formula (4) hardly progresses. Therefore, it can be seen that the volume fraction of residual carbonyl sulfide remains high compared to Example 4.

### REFERENCE SIGNS LIST

- 1: solid oxide electrolyzer cell (SOEC)
- 2: solid electrolyte
- 3: cathode
- 4: anode
- 5: DC power supply
- S1: dry desulfurization process
- S1': hydrodesulfurization process (conventional technology)
- S2: electrolysis process
- S3: reduction process
- O1: dust removal process
- O2: hydrolysis process
- O3: dehydration process
- O4: hydration process

## Claims

1. A method of producing reducing gas containing carbon monoxide from feed gas containing carbon dioxide and a sulfur compound,
wherein the feed gas consists of one or more by-product gases selected from the group consisting of blast furnace gas, hot stove exhaust gas, coke oven exhaust gas, heating furnace exhaust gas, annealing furnace exhaust gas, and power generation apparatus exhaust gas,
the method comprising:
a dry desulfurization process of removing the sulfur compound from the feed gas to obtain purified gas; and
an electrolysis process of electrolyzing the purified gas using a solid oxide electrolyzer cell to obtain the reducing gas.

2. The method of producing reducing gas according to claim 1, wherein
the sulfur compound comprises at least one of carbonyl sulfide or carbon disulfide.

3. The method of producing reducing gas according to claim 2, further comprising,
upstream of the dry desulfurization process, a hydrolysis process of hydrolyzing at least one of carbonyl sulfide or carbon disulfide.

4. The method of producing reducing gas according to any one of claims 1 to 3, wherein
the dry desulfurization process includes an operation to remove the sulfur compound using a dry desulfurizing agent.

5. The method of producing reducing gas according to claim 4, wherein
the dry desulfurizing agent is a desulfurizing agent containing zinc oxide.

6. The method of producing reducing gas according to any one of claims 1 to 5, further comprising,
upstream of the dry desulfurization process, a dehydration process of removing water and water vapor contained in the feed gas.

7. The method of producing reducing gas according to any one of claims 1 to 6, further comprising,
upstream of the dry desulfurization process, a dust removal process of removing dust contained in the feed gas.

8. The method of producing reducing gas according to any one of claims 1 to 7, further comprising,
downstream of the dry desulfurization process but upstream of the electrolysis process, a hydration process of adding water vapor to the purified gas,
wherein the reducing gas contains hydrogen.

9. The method of producing reducing gas according to any one of claims 1 to 8, wherein
the feed gas consists of the blast furnace gas.

10. A method of reducing iron ore, the method comprising:
a dry desulfurization process of removing a sulfur compound from by-product gas generated from a blast furnace, the by-product gas containing carbon dioxide and the sulfur compound, to obtain a purified gas;
an electrolysis process of electrolyzing the purified gas using a solid oxide electrolyzer cell to obtain reducing gas; and
a reduction process of supplying the reducing gas to the blast furnace to reduce the iron ore.
